# EUROPEAN PATENT APPLICATION

(11) **EP 3 643 639 A1**
(43) Date of publication of application: **29.04.2020**
(21) Application number: 18819906.1
(22) Date of filing: 19.06.2018
(51) Int. Cl.: B65D 75/32, B32B 15/082, B32B 15/095, B32B 27/00, B32B 27/30, B32B 27/40, B65D 65/40, B65D 77/20

(54) **COVER MATERIAL FOR PRESS-THROUGH PACKAGES**

(30) Priority: 20.06.2017 JP 2017120815
(71) Applicant: Asahi Kasei Kabushiki Kaisha, Tokyo 100-0006 (JP)
(72) Inventor: KONDO, Motoki, Tokyo 101-8101 (JP); KANETA, Yukimasa, Tokyo 101-8101 (JP); ITO, Masahiro, Tokyo 101-8101 (JP)
(74) Representative: D Young & Co LLP
(86) International application number: PCT/JP2018/023354
(87) International publication number: WO 2018/235835

(57) **Abstract**

Provided is a lid material for a press-through pack package, comprising a heat-seal layer composed of a heat-sealing agent and a lid material film, wherein the heat-sealing agent contains an adhesive resin having a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0. Also provided is a lid material for a press-through pack package, comprising a heat-seal layer composed of a heat-sealing agent and a lid material film, wherein the heat-sealing agent contains an adhesive resin having a melting point of from 40°C to lower than 90°C.

## Description

### TECHNICAL FIELD

The present disclosure relates to a lid material for a press-through pack package, which can be suitably used mainly for a press-through pack package of medicine such as a tablet or a capsule, or food such as candy or chocolate.

### BACKGROUND

A press-through pack (that may be referred to as "PTP" in the present specification) package comprising a bottom material and a lid material is known as one of packaging forms for medicine, food, and the like. The PTP package is formed by subjecting a plastic sheet composed of a polyvinyl chloride resin, a polypropylene resin, or the like to vacuum forming or pressure forming, thereby forming a bottom material having a pocket-shaped recess, filling a content to this recess, and then sealing a flange portion, which is a portion other than the recess, using a lid material having a heat-sealing property.

The PTP package is configured so that a content contained therein is taken out by applying a force to the content in the direction from an outer side of the bottom material to the lid material, to thereby break the lid material. For example, a lid material including a lid material film, a heat-seal layer disposed on one surface of the lid material film, and a printed portion and OP (over-print) varnish layer disposed on the other surface (opposite surface) of the lid material film is known as a conventional lid material of the PTP package.

Examples of lid material films presently used include aluminum foil, glassine paper, and stretched film of thermoplastic resin, which are excellent in a property of being easily broken by pushing out a content (press-through property). Examples of known heat-sealing agents for forming a heat-seal layer include a vinyl chloride resin heat-sealing agent (see PTL1), a vinyl chloride/polyester resin heat-sealing agent (see PTL2), and an acryl modified polypropylene heat-sealing agent (see PTL3). Further, Examples of known filler-containing heat-sealing agents include an emulsion type heat-sealing agent (see PTL4) obtained by blending polymethyl methacrylate crosslinked copolymer (crosslinked PMMA) beads and/or polystyrene crosslinked copolymer (crosslinked PS) beads.

### CITATION LIST

### Patent Literature

PTL1: JP 2008-174302 A
PTL2:JP 2005-178829 A
PTL3: JP H09-57920 A
PTL4: JP 2012-201839 A

### SUMMARY

### (Technical Problem)

However, as for lid materials for a PTP package using the heat-sealing agents according to PTL1 to PTL3, since a resin such as a vinyl chloride-polyester resin contains a large amount of an organic solvent such as toluene, ethyl acetate, or MEK, which is a solvent, and is dissolved in the solvent before applying, there is a probability that during a drying process in applying, a large ventilating equipment applicable to an organic solvent is required from a viewpoint of organic solvent poisoning, that the appearance is deteriorated due to apron marks generated in a reeling process depending on a drying condition, or that blocking occurs during feeding in a slitting process afterward. Moreover, in the case of using a stretched film composed of a thermoplastic resin as a lid material film, since the resin generally has a poor chemical resistance, applying often becomes difficult. Here, "blocking" refers to a phenomenon that in a lid material reeled in a roll shape, one surface of the lid material is pasted to the other surface after rolling by one round, whereby it becomes difficult to peel off each other.

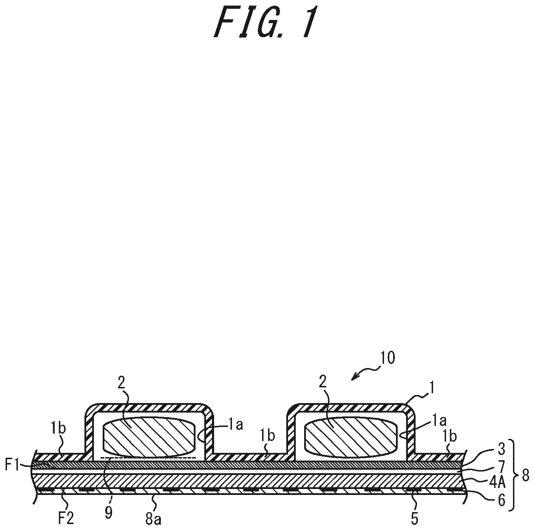

As for the lid materials for a PTP package according to PTL1 to PTL3, the sealing temperature in heat-sealing to a bottom material during a PTP packaging process is necessarily set at a high temperature (in general, roughly 220°C to 260°C), and thus a content of the PTP (tablet, food, or the like) is likely to be exposed to heat. Therefore, it is difficult to apply the lid materials for a PTP package according to PTL1 to PTL3 to a content which is likely to be damaged by heat, and when the clearance between the content and the lid material (see the clearance 9 in FIG. 1) was too small, there was a probability that a burn mark was left on the content (for example, a phenomenon called "a burn of a tablet"). Therefore, the recess size of the bottom material and the size of the content are limited.

In addition, a PTP package which has been heat-sealed at a high temperature is easily curled due to thermal contraction of the bottom material or the like. This makes it easy to cause such problems that the appearance of the package is impaired, that the PTP packages can be hardly overlapped with each other when being packed into a pillow packaging or an outer case, that the packing volume is increased, and that the PTP package gets stuck and cannot enter a case smoothly.

As an adhesive laminate obtained by coating with a filler-containing adhesive resin composition according to PTL4, an OPP film coated with an ethylene vinyl acetate-based emulsion type heat-sealing agent containing 0.25 mass% to 1.00 mass% of crosslinked PMMA particles and/or crosslinked PS particles as a filler, which is excellent in blocking resistance after storage and low-temperature heat-sealing property, is disclosed. However, when this OPP film is used as a lid material for a PTP package, there are such problems that it has a deteriorated blocking resistance after storage at a high temperature (40°C) and high humidity (90% RH), which is equivalent to the case of being shipped in summer or being in a subtropical region, and that a PTP package that has been heat-sealed at a low temperature (roughly 100°C to 150°C) and for a short time (0.1 second) has deteriorated appearance and low-temperature heat-sealing property because a folding wrinkle is generated in a flange portion and an unadhered portion is generated.

In preparation of a PTP package, packaging with a high-speed packaging machine that performs production at a very high line speed has become the mainstream in recent years for the purpose of improving productivity, and as a result, there is a demand for a lid material that can exhibit a favorable heat-sealing property even when the heat-seal time is extremely short.

However, there is a problem that when the glass transition temperature Tg of the heat-sealing agent is simply lowered in order to make it possible to bond by heat-sealing for a short time, the seal surface of the lid material will have tackiness, and the sliding property of the lid material will be deteriorated.

Therefore, an objective of the present disclosure is to provide a lid material for a PTP package that makes it possible to obtain a PTP package having a sufficient heat-sealing strength even when heat-sealed in an extremely short time by a high-speed packaging machine and that has a favorable sliding property.

### (Solution to Problem)

As a result of diligent investigation with the aim of solving the problems set forth above, the inventors discovered that the problems set forth above can be solved by providing a lid material for a PTP package comprising a heat-seal layer composed of a heat-sealing agent containing an adhesive resin having a ratio E1/E2 of a storage elastic modulus at 30°C E1 to a storage elastic modulus at 60°C E2 of a value within in a specific region and a ratio E2/E3 of E2 to a storage elastic modulus at 80°C E3 of a value within in a specific region. In this manner, the inventors completed the present disclosure.

In addition, as a result of diligent investigation with the aim of solving the problems set forth above, the inventors discovered that the problems set forth above can be solved by providing a lid material for a PTP package comprising a heat-seal layer composed of a heat-sealing agent containing an adhesive resin having a specific melting point. In this manner, the inventors completed the present disclosure.

Specifically, the present disclosure provides a lid material for a PTP package as follows.
(1) A lid material for a press-through pack package, comprising a heat-seal layer composed of a heat-sealing agent and a lid material film, wherein the heat-sealing agent contains an adhesive resin having a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0.
(2) A lid material for a press-through pack package, comprising a heat-seal layer composed of a heat-sealing agent and a lid material film, wherein the heat-sealing agent contains an adhesive resin having a melting point of from 40°C to lower than 90°C.
(3) The lid material for a press-through pack package according to (1) or (2), wherein the adhesive resin is mainly composed of at least one selected from the group consisting of a polyurethane resin, a polyester resin, an acrylic resin, and a vinyl acetate copolymer.
(4) The lid material for a press-through pack package according to any one of (1) to (3), wherein the adhesive resin is mainly composed of a polyurethane resin.
(5) The lid material for a press-through pack package according to any one of (1) to (4), wherein the heat-seal layer has a thickness of from 4 µm to 15 µm.
(6) The lid material for a press-through pack package according to any one of (1) to (5), wherein the adhesive resin has an elongation of from 200% to 1000%.
(7) The lid material for a press-through pack package according to any one of (1) to (6), wherein the lid material film contains a styrene resin.
(8) The lid material for a press-through pack package according to (7), wherein the lid material film has a thickness of from 15µm to 30 µm.
(9) The lid material for a press-through pack package according to any one of (1) to (8), wherein a vapor deposition layer is provided between the heat-seal layer and the lid material film.
(10) The lid material for a press-through pack package according to (9), wherein a gloss value measured from the heat-seal layer side is from 50 to 600.

### (Advantageous Effect)

According to the present disclosure, it is possible to provide a lid material for a PTP package that makes it possible to obtain a PTP package having a sufficient heat-sealing strength even when heat-sealed in an extremely short time by a high-speed packaging machine and that has a favorable sliding property.

### BRIEF DESCRIPTION OF THE DRAWING

In the accompanying drawing:
FIG. 1 is a cross-sectional view illustrating an embodiment of a PTP package including a lid material for a PTP package according to the present disclosure.

### DETAILED DESCRIPTION

The following refers to the drawing to describe an embodiment according to the present disclosure (hereinafter also referred to as "the present embodiment") in detail. The lid material for a PTP package of the present embodiment is a lid material mainly used in a PTP package for filling medicine such as a tablet or a capsule, or food such as candy or chocolate (here, the case of filling a tablet is exemplified) as a content. Note that the present disclosure is not limited to the following embodiment.

In the present specification, a lid material for a PTP package may be simply referred to as a "lid material".

### <Lid material for PTP package>

A PTP package 10 of the present embodiment as illustrated in FIG. 1 includes a bottom material 1 and a lid material for a PTP package 8 of the present embodiment. The bottom material 1 has a recess 1a, which has been formed into a pocket shape, and a flange portion 1b to be adhered to the lid material 8. The recess 1a is filled with a content 2. The lid material 8 includes a lid material film 4A and a heat-seal layer 3, and the heat-seal layer 3 adheres to the bottom material 1 at the flange portion 1b.

In the lid material 8, the heat-seal layer 3 bonds the surface of the flange portion 1b of the bottom material 1 to a surface F1 of the lid material film 4A. The heat-seal layer 3 forms a surface on which the flange portion 1b of the bottom material 1 is fused.

In addition, on a surface F2 of the lid material film 4A opposite to the bottom material 1, a printed portion 5 of a product name logo or the like may be formed with an ink containing a colored urethane resin or acryl resin, or the like. In this case, a surface protective layer (OP (over-print) varnish layer) 6 for protecting the printed portion 5 is formed so as to cover the whole surface F2 (see FIG. 1). Further, in a case in which the content is medicine, the surface F1 may be subjected to printing or vapor deposition of aluminum or the like for the purpose of preventing medical malpractice.

One aspect of the lid material for a PTP package of the present embodiment is a lid material for a press-through pack package, comprising a heat-seal layer composed of a heat-sealing agent and a lid material film, wherein the heat-sealing agent contains an adhesive resin having a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0.

The heat-seal layer 3 contains an adhesive resin having a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0. By this heat-seal layer 3 included in the lid material 8, the bottom material 1 and the lid material 8 can have a sufficient heat-seal strength and have a favorable appearance without a folding wrinkle in the flange portion 1b that is heat-sealed even when the lid material 8 is heat-sealed at a low temperature (about 120°C) for an extremely short time of 0.03 second or less.

Further, by an adhesive resin having E1/E2 of from 4.0 to 20.0 contained in the heat-seal layer 3, the lid material 8 can exhibit an excellent sliding property. Here, the "excellent sliding property" means that the coefficient of friction between the lid material 8 and the bottom material 1 is low, and even when the lid material 8 and the bottom material 1 come into contact with each other, the lid material 8 easily slides against the bottom material 1.

In addition, by an adhesive resin having E2/E3 of from 1.3 to 4.0 contained in the heat-seal layer 3, the temperature at which the lid material 8 is heat-sealed can be set within a wide range, and thus the lid material 8 become adaptive to various types of forming machines.

Further, by using a polyurethane resin as an adhesive resin, the elongation of the heat-seal layer 3 is improved. Therefore, when the content 2 is pushed out from the PTP package 10, the torn lid material 8 is not separated and remains in the PTP package 10 owing to elongation of the heat-seal layer 3, as a result of which accidental ingestion of the torn lid material 8 can be advantageously prevented.

### (Lid material film)

The lid material film 4A may be composed of any material that has a property of being easily broken by pushing out the content 2 (press-through property), and is generally aluminum foil, glassine paper, a film composed of a thermoplastic resin, or the like. In view of burnability in disposal, recyclability, legibility of printings, and the like, a film containing a thermoplastic resin is preferable, and a film composed of a thermoplastic resin is more preferable.

When the lid material film 4A is a film composed of a thermoplastic resin, the lid material film 4A is preferably a stretched film.

No specific limitations are placed on the thermoplastic resin as long as it can be formed into a film shape. Examples of the thermoplastic resin include styrene resins, olefin resins such as ethylene resins and propylene resins, ester resins (including polylactic acid), and amide resins. These may be used singly, or in mixture of two or more kinds thereof. Among these thermoplastic resins, styrene resins are preferably used in view of rigidity and fragility.

The styrene resin refers to a homopolymer or copolymer of a styrene monomer, or a mixed composition thereof. Examples of the styrene monomer include styrenes (for example, GPPS) and alkyl styrenes such as α-methyl styrene. The copolymer of a styrene monomer may be a styrene-(meth)acrylic acid copolymer, a styrene-(meth)acrylate copolymer, a styrene-(meth)acrylic acid-(meth)acrylate copolymer, a styrene-acid anhydride copolymer, a styrene-butadiene copolymer, a high impact polystyrene (for example, HIPS), a styrene-α-methyl styrene copolymer, or the like which has a styrene component of 50 mass% (wt%) or more.

As a styrene resin, a polymer alloy of polystyrene and polyphenylene ether resin (m-PPE) or the like may be used.

Among these, at least one selected from the group consisting of a styrene-acrylic acid copolymer, a styrene-methacrylic acid copolymer, a styrene-maleic anhydride copolymer, and a ternary copolymer resin containing two monomer components constituting any one of these three copolymers and an ester component as another monomer is more preferably used.

The ester component of the ternary copolymer resin set forth above may be methyl acrylate, ethyl acrylate, propyl acrylate, butyl acrylate, hexyl acrylate, cyclohexyl acrylate, methyl methacrylate, ethyl methacrylate, propyl methacrylate, butyl methacrylate, hexyl methacrylate, cyclohexyl methacrylate, or the like. These ester components are effective in improving the thermal stability of the resin in the case of continuous heating, for example, during a melt process with an extruder.

The copolymer of a styrene monomer set forth above is also referred to as a "styrene copolymer resin", regardless of the number of kinds of copolymerized components.

The amount of the styrene component in the styrene copolymer resin set forth above is preferably from 70 mass% to 97 mass% and more preferably from 75 mass% to 95 mass% based on the total amount of the resin components constituting the styrene copolymer resin (100 mass%). When the amount of the styrene component is 97 mass% or less, not only the press-through property but also the heat resistance of the resin is improved, as a result of which in the manufacture process of the PTP package 10, it becomes possible to stably manufacture without deformation of the lid material film 4A when the bottom material is heat-sealed. In addition, when the amount of the styrene component is 70 mass% or more, stretch film forming can be easily performed in preparation of the lid material film 4A, as a result of which it becomes possible to achieve both rigidity and press-through property.

Among the above, a styrene-methacrylic acid copolymer and a ternary copolymer resin containing the same and an ester component are more preferable for a viewpoint of easiness of extrusion stretch film forming.

The above-described styrene resin suitably used in the present embodiment may be required to have an improved stability during stretch film forming (no necking, stable stretch initiation position, and small thickness unevenness (R being generally 10 µm or less) without a practical problem) and an impact resistance against impact such as impact at restarting after a temporary stop or impact at punching in a packaging process in various processes performed afterward to obtain a PTP package. For the purpose of improving these properties, it is preferable to compound at least one selected from the group consisting of a high impact polystyrene (HIPS), a styrene-conjugated diene copolymer, and a hydrogenated product of a styrene-conjugated diene copolymer in an amount of from 0.5 mass% to 80 mass% based on the total amount of the resin components constituting the styrene resin (100 mass%). The compounding amount is more preferably from 1.0 mass% to 45 mass% and still more preferably from 1.0 mass% to 30 mass%. When the compounding amount is 0.5 mass% or more, the stretch stability and impact resistance are improved, and when the compounding amount is 80 mass% or less, the press-through property and sturdiness (stiffness) of the film are maintained.

When the lid material film 4A is formed using a thermoplastic resin, a filler, particularly an inorganic filler may be compounded to the thermoplastic resin. Although it is possible to give a favorable press-through property without compounding an inorganic filler, it is possible to reduce the thrust strength by compounding an inorganic filler depending on the preference of impression from use upon pushing out the content 2, to thereby adjust the press-through property, considering that a user of the PTP package 10 is not always a healthy person, but may also be an aged person or a child lacking physical strength. As an inorganic filler, non-crystalline alumina silicate, silica, alumina, talc, kaolin, mica, wollastonite, clay, calcium carbonate, glass fiber, aluminum sulfate, or the like may be used.

In addition, the lid material film 4A may be subjected to a treatment such as compounding an additive usually used in the art, for example, metallic soap for assisting dispersion of the inorganic filler, a coloring agent, a plasticizer, an antioxidant, a heat stabilizer, an ultraviolet absorber, a lubricant, or an antistatic agent, or a treatment for improving the characteristics of printing and/or vapor deposition, such as a corona treatment, a plasma treatment, an ultraviolet treatment, or an AC (anchor coat) treatment.

In particular, a white coloring agent and white printing are preferred for the following reason. Recently, as for a PTP package for medicine, there has been an increasing need for printing a bar code including various information such as product code, validity period, serial number, quantity, and the like, the purposes of which are to prevent medical accidents and to ensure traceability, in addition to a conventional drawing pattern illustrating product name logo or usage. Using a lid material film 4A obtained by compounding a white coloring agent to a thermoplastic resin or subjected to white printing, a portion without lines (a portion where the lid material film 4A is visible directly) is white. Therefore, when the bar code is read, in such a lid material film 4A, mirror reflection is less likely to occur as compared with a lid material made of a plain aluminum foil, and there is a shade of colors formed by the portion having the bar code lines (generally black) and other portions, as a result of which the bar code can be easily read. For this reason, such a lid material film 4A is preferred.

When the lid material film 4A is formed using a thermoplastic resin, the Vicat softening point of the thermoplastic resin is preferably 80°C or higher, more preferably 95°C or higher, and most preferably 110°C or higher from a viewpoint of allowing for performing stable heat-sealing without generating deformation such as a wrinkle or the like in the lid material film 4A during heat-sealing with the bottom material 1. A heat-sealing agent as mentioned below is suitable for low-temperature heat-sealing. Therefore, the lid material film 4A made of a material having a low heat resistance (specifically, a material having a Vicat softening point of from 80°C to 150°C or a melting point of from 80°C to 150°C) also can be used as a lid material film 4A for heat-sealing.

The lid material film 4A is preferably a stretched film. Since the lid material film 4A is often loaded with a strong tension in each processing step until it is used, the lid material film 4A is required to have a tensile strength capable of withstanding each processing. When a thermoplastic resin film is stretched and oriented, the film has a greatly improved tensile strength in a stretching direction, while the film tends to have a relatively small improvement in the thrust strength. Therefore, when the thermoplastic resin film is a stretched film, it is possible to give a tensile strength capable of withstanding processing to the film even in a case in which the thrust strength of the film is reduced due to reduction of the film thickness or addition of an inorganic filler.

Representative examples of a method for producing a stretched film include a method in which a thermoplastic resin (a resin in which an inorganic filler is optionally compounded at a predetermined ratio) is melt mixed with a screw extruder or the like, formed into a sheet shape with a T die, and then uniaxial stretched by roll stretching or tenter stretching, a method in which biaxial stretching is performed by roll stretching followed by tenter stretching, and a method in which stretching is performed by inflation. In these cases, the stretch ratio is preferably from 2 to 20 times and more preferably from 5 to 10 times in at least one of the lateral and longitudinal directions.

The lid material film 4A preferably has a thrust strength of from 1 N to 5 N measured according to the thrust strength test of JIS Z1707. When a lid material film 4A having a thrust strength of 1 N or more, which is an appropriate strength, is used as the PTP package 10, the lid material 8 is less likely to be unintentionally broken. When a lid material film 4A having a thrust strength of 5 N or less, the film can be easily broken and exhibits an appropriate press-through property. Considering a case in which a user of the PTP package 10 is an aged person or a child lacking physical strength, the thrust strength is more preferably from 1 N to 3N.

Note that the thrust strength refers to a maximum stress generated from when a semicircular needle having a diameter of 1 mm and a tip shape radius of 0.5 mm is stuck at a speed of 50 mm per minute until the needle penetrates according to JIS Z1707.

The thickness of the lid material film 4A is preferably from 5 µm to 50 µm, more preferably from 10 µm to 30 µm, still more preferably from 15 µm to 30 µm, and particularly preferably from 15 µm to 25 µm. When the thickness is 5 µm or more, the film has an appropriate strength and easily exhibits a tensile strength capable of withstanding processing, and when the thickness is 50 µm or less, the film easily exhibits an appropriate press-through property.

### (Heat-seal layer)

The raw material of the heat-seal layer 3 included in the lid material 8 is a heat-sealing agent as mentioned below, and the heat-seal layer 3 is preferably composed only of a heat-sealing agent.

The heat-sealing agent contains an adhesive resin having a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0. Particularly preferably, the adhesive resin is mainly composed of a polyurethane resin from a viewpoint of excellent low-temperature heat-sealing property. The heat-sealing agent may further contain a filler.

Note that the main component in the present disclosure means a component the content (content ratio) of which is the largest, and the content is preferably 50 mass% or more, more preferably 60 mass% or more, and still more preferably 70 mass% or more.

### - Adhesive resin -

The adhesive resin has a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0. The adhesive resin and the bottom material 1 can be fused (heat-sealed) to each other by melting the adhesive resin or melting the adhesive resin together with the bottom material 1 by heat.

Although the kind of adhesive resin may be any kind that has E1/E2 of from 4.0 to 20.0 and E2/E3 of from 1.3 to 4.0, it is preferable that the adhesive resin is mainly composed of at least one selected from the group consisting of a polyurethane resin, a polyester resin, an acrylic resin, and a vinyl acetate copolymer. Among these, the polyurethane resin is particularly preferable. These resins may be used in combination so that the content of the component mainly composed of these resins is 50 mass% or more of the adhesive resin to the extent that the properties of the adhesive resin are not impaired.

For example, a polyvinyl butyral resin, a vinyl benzene resin, a polyamide resin, a vinyl chloride/vinyl acetate copolymer, a vinyl chloride/polyester resin, a chlorinated polyolefin (a chlorinated polypropylene, a chlorinated polyethylene, or the like), a styrene block copolymer or a derivative thereof (a styrene-isoprene block copolymer, a styrene-butadiene block copolymer, or a hydrogenated product or maleic anhydride-modified product thereof), or the like may be contained in the adhesive resin in an amount within the range of preferably less than 50 mass%, more preferably less than 40 mass%, and particularly preferably less than 30 mass% to the extent that the properties of the adhesive resin are not impaired.

### -- Polyurethane resin --

The polyurethane resin is a reaction product of a polyisocyanate and a polyol.

No specific limitations are placed on the polyisocyanate compound used in the synthesis of the polyurethane resin as long as it is an organic polyisocyanate compound containing two or more isocyanate groups in one molecule. Examples of the polyisocyanate compound include aromatic, aliphatic, and alicyclic organic diisocyanates such as tolylene diisocyanate, diphenylmethane diisocyanate, cyclohexane diisocyanate, tolylene diisocyanate, hexamethylene diisocyanate (HDI), trimethylhexane diisocyanate, 1,5-naphthalene diisocyanate, xylylene diisocyanate, 2,6-diisocyanate methyl caproate, isophorone diisocyanate (IPDI), methylcyclohexane-2,4-(or 2,6-)diisocyanate, and 4,4'-methylenebis(cyclohexyl isocyanate). These may be used singly, or in mixture of two or more kinds thereof. From a viewpoint of preventing coloring, aliphatic isocyanates are preferable, and from a viewpoint of resin strength, aromatic isocyanates are preferable.

Examples of the polyol used in the synthesis of the polyurethane resin include a polymeric polyol such as a polyester diol, a polyether diol, a polyester polyol, a polyacryl diol, a polyester amide diol, a polycarbonate diol, a mixture thereof, or a copolymer thereof.

Examples of the polyether diol include a polyoxyethylene glycol, a polyoxypropylene glycol, a polytetramethylene ether glycol, a polyoxypentamethylene glycol, a copolymerized polyether glycol composed of tetramethylene groups and 2,2-dimethylpropylene groups, a copolymerized polyether glycol composed of tetramethylene groups and 3-methyltetramethylene groups, and a mixture thereof.

Examples of the polyester diol include an esterification reaction product of a polycarboxylic acid and an acid anhydride thereof with an alkyl polyol, and an esterification reaction product obtainable by polymerizing a hydroxycarboxylic acid and/or a lactone that is an internal ester thereof using an alkyl polyol as an initiator.

Examples of the polycarboxylic acid include oxalic acid, malonic acid, succinic acid, methylsuccinic acid, 2,3-dimethylsuccinic acid, hexylsuccinic acid, glutaric acid, 2,2-dimethylglutaric acid, 3,3-dimethylglutaric acid, 3,3-diethylglutaric acid, adipic acid, pimelic acid, suberic acid, azelaic acid, sebacic acid, 1,2-cyclohexanedicarboxylic acid, 1,3-cyclohexanedicarboxylic acid, 1,4-cyclohexanedicarboxylic acid, and 1,1-cyclobutanedicarboxylic acid.

Specific examples of the alkyl polyol as a component of the polyester polyol include ethylene glycol, 1,3-propanediol, propylene glycol, 2,3-butanediol, 1,4-butanediol, 2-ethylbutane-1,4-diol, 1,5-pentanediol, 1,6-hexanediol, 1,7-heptanediol, 1,8-octanediol, 1,9-nonanediol, 1,10-decanediol, 1,9-decanediol, 1,4-cyclohexanediol, 1,4-dimethylolcyclohexane, 2,2-diethylpropane-1,3-diol, 2,2-dimethylpropane-1,3-diol, 3-methylpentane-1,4-diol, 2,2-diethylbutane-1,3-diol, 4,5-nonanediol, diethylene glycol, triethylene glycol, dipropylene glycol, neopentyl glycol, glycerin, pentaerythritol, erythritol, sorbitol, mannitol, trimethylolpropane, and trimethylolethane.

Among these, the polyester diol is preferable from a viewpoint of resin strength.

### -- Polyester resin --

The polyester resin is a polymer that is synthesized by a polycondensation reaction between a polyvalent carboxylic acid and a polyhydric alcohol, and various raw materials can be used.

The kind of polyester resin may be any one of saturated homopolyester resins (that do not have an unsaturated bond in a polyester main chain), saturated copolyester resins, alkyd resins, and unsaturated polyester resins (that have an unsaturated bond in a polyester main chain). The saturated copolyester resin is preferable in view of excellent low-temperature heat-sealing property and blocking resistance.

Examples of the polyvalent carboxylic acid to be polycondensed include oxalic acid, malonic acid, succinic acid, glutaric acid, adipic acid, pimelic acid, phthalic acid, and citric acid. Examples of the polyhydric alcohol to be polycondensed include ethylene glycol, propanediol, butanediol, and glycerin. These may be used singly, or in combination of two or more kinds thereof. Examples of the polyester resin include a resin composed of one kind of polyvalent carboxylic acid (for example, phthalic acid) and two kinds of polyhydric alcohols (for example, ethylene glycol and butanediol).

### -- acrylic resin --

The acrylic resin is a polymer containing an ethyleny unsaturated monomer having at least one kind of carboxyl group or carboxylate group as a monomer component. The acrylic resin may be a homopolymer or copolymer of an ethyleny unsaturated monomer having at least one kind of carboxyl group or carboxylate group, or may be a copolymer of this monomer and another monomer copolymerizable therewith. The acrylic resin may also be an alkali metal salt, amine salt, or ammonium salt of a carboxyl group (carboxylic acid) of the homopolymer or the copolymer.

Examples of the ethyleny unsaturated monomer having a carboxyl group or carboxylate group include methacrylic acid, acrylic acid, a methacrylate, and an acrylate.

When the acrylic resin is a copolymer, examples of the above-described "another monomer" include ethylene; aromatic vinyl monomers such as styrene, α-methylstyrene (vinyl toluene), and chloro styrene; cyano group-containing ethyleny unsaturated monomers such as acrylonitrile and methacrylonitrile; acrylamide monomers such as acrylamide, N-methylolmethacrylamide, and N-butoxymethylacrylamide.

Specific examples of the acrylic resin that is a copolymer include a methacrylate-acrylate copolymer, a acrylate-acrylate copolymer, a ethylene-acrylic acid copolymer (EAA), an ethylene-methacrylic acid copolymer (EMAA), an ethylene-acrylate copolymer, a styrene-acrylic acid copolymer, and a styrene-acrylate copolymer.

The glass transition temperature can be adjusted by appropriately varying the kind or ratio of monomers to be copolymerized. When the acrylic resin is a copolymer, the ratio of a structural unit having an acrylic structure to the entire copolymer is preferably 20% or more.

### -- Vinyl acetate copolymer --

The vinyl acetate copolymer is a copolymer of vinyl acetate and at least one monomer copolymerizable with vinyl acetate.

Examples of the monomer copolymerizable with vinyl acetate include ethylene, alkyl(meth)acrylates such as n-butyl(meth)acrylate and 2-ethylhexyl(meth)acrylate, hydroxyl group-containing (meth)acrylates such as 2-hydroxyethyl(meth)acrylate, and acrylic acid.

Specific examples of the vinyl acetate copolymer include an ethylene vinyl acetate copolymer.

In the vinyl acetate copolymer, the ratio of a structural unit having a vinyl acetate structure to the entire copolymer is preferably 20% or more.

The adhesive resin has a ratio E1/E2 of a storage elastic modulus at 30°C E1 to a storage elastic modulus at 60°C E2 of from 4.0 to 20.0, preferably from 5.0 to 15.0, and more preferably from 5.0 to 10. When E1/E2 is 4.0 or more, the tackiness of the lid material at room temperature is suppressed, and a trouble that a wrinkle is generated during tablet packaging is unlikely to occur. In addition, when E1/E2 is 20.0 or less, the adhesive resin is easily softened to wet and spread under heat-sealing conditions, and thus the lid material has a favorable heat-sealing property.

Further, the adhesive resin has a ratio E2/E3 of a storage elastic modulus at 60°C E2 to a storage elastic modulus at 80°C E3 of from 1.3 to 4.0, preferably from 1.4 to 2.0, and more preferably from 1.6 to 2.0. When E2/E3 is 1.3 or more, the heat-sealing strength can be easily adjusted by the heat-sealing temperature. In addition, it is preferable that E2/E3 is 4.0 or less because the seal layer is not excessively stretched during heat-sealing, an appropriate thickness of the seal layer is maintained after heat-sealing, and the heat-sealing strength is maintained.

A method for controlling E1/E2 and E2/E3 of the adhesive resin within the above-described ranges includes, for example, adjusting the adhesive resin so as to have a melting point or Tg of from 30°C to 60°C because the storage elastic modulus largely changes around the melting point. A general method is used to adjust the melting point. For example, the melting point can be adjusted to be high by increasing the molecular weight, and the melting point and Tg can be adjusted to be low by introducing a structure having a side chain that inhibits regularity of a molecular chain, thereby decreasing crystallinity.

In the present disclosure, E1, E2, and E3 are values measured by procedures explained in the [EXAMPLES] section described later.

The elongation of the adhesive resin is preferably from 200% to 1000%, more preferably from 400% to 950%, and still more preferably from 600% to 900%. When the elongation is from 200% to 1000%, the low-temperature heat-sealing property is excellent, and the seal layer is broken when a tablet is pushed out, to thereby allow the tablet to be taken out.

In the present disclosure, the elongation of the adhesive resin is a value measured by the procedure explained in the [EXAMPLES] section described later.

### - Filler -

Examples of the above-described filler that can be used include inorganic fillers such as calcium carbonate, fluorine resin, silicone, silica, glass beads, and metallic oxides including titania, alumina, and magnesia; and organic fillers such as various granular polymers including nylon, PE, polystyrene (PS), PP, polyester, acrylic resins (polymethyl methacrylate, crosslinked copolymer of polymethyl methacrylate, and the like), and plastic of urethane. These may be used singly, or in mixture of two or more kinds thereof. Preferably, the filler is an organic filler mainly composed of at least one selected from the group consisting of a polymethyl methacrylate, a crosslinked polymer thereof, and a polystyrene crosslinked polymer in view of unlikeliness to precipitate and separate in a coating liquid of a heat-sealing agent, stability as an emulsion, heat resistance during heat-sealing, and transparency of the PTP package.

The compounding amount of the filler is preferably more than 1 part by mass and 15 parts by mass or less, more preferably from 2 parts by mass to 15 parts by mass, and further preferably from 3 parts by mass to 15 parts by mass based on 100 parts by mass of the adhesive resin. When the content of the filler is 1 part by mass or less, blocking or deterioration of the low-temperature heat-sealing property may occur under a high-temperature (40°C) and high-humidity (90% RH) atmosphere, which is equivalent to the case of being shipped in summer or being in a subtropical region. When the content of the filler is more than 15 parts by mass, the outlines of printings in the print portion 5 between the heat-seal layer 3 and the lid material film 4A may be blurred, resulting in deterioration of visibility and transparency, or there may be gaps between the lid material 8 and the bottom material 1, resulting in insufficient adhesion.

Representative examples of methods for providing the heat-seal layer 3 on the lid material film 4A include a method in which a heat-sealing agent is applied and dried on the lid material film 4A, a method in which a resin having a heat-sealing property is extrusion laminated on the lid material film 4A, and a method in which a film having a heat-sealing property is laminated on the lid material film 4A. Among these, the method in which a heat-sealing agent is applied and dried on the lid material film 4A is preferred in view of simple process and excellent productivity.

Further, in the case of the method in which a heat-sealing agent is applied and dried, it is preferable to use the heat-sealing agent in the form of an aqueous emulsion in which polymer particles are dispersed in water in view of environmental friendliness and applicability on a resin film having a poor solvent resistance.

In the present embodiment, the above-described aqueous emulsion may be prepared while polymerizing the adhesive resin as a component of the heat-sealing agent. In this case, the method for preparing the aqueous emulsion is not particularly limited, and may be a polymerization method such as emulsion polymerization, suspension polymerization, bulk polymerization, or miniemulsion polymerization. In particular, emulsion polymerization is preferable from a viewpoint of stably producing an emulsion that has an average particle size of roughly from 10 nm to 1 µm and has a favorable dispersion stability.

The thickness of the heat-seal layer 3 is preferably from 4 µm to 15 µm, more preferably from 5 µm to 12 µm, and still more preferably from 6 µm to 10 µm in view of heat-sealing property, elongation, and penetrability of the PTP package. The thickness of the heat-seal layer 3 is preferably 4 µm or more because of a sufficient heat-sealing property and a favorable elongation, and preferably 15 µm or less because the content 2 can easily break through the lid material 8.

In the present disclosure, the thickness of the heat-seal layer 3 is a value measured by the procedure explained in the [EXAMPLES] section described later.

### (Vapor deposition layer)

The lid material for a PTP package 8 of the present embodiment may be provided with a vapor deposition layer 7 between the lid material film 4A and the heat-seal layer 3 (at a position F1). In particular, in a PTP package 10 having the vapor deposition layer 7 in addition to a heat-seal layer 3 containing an adhesive resin including a polyurethane resin, the gloss of the vapor deposition layer 7 becomes moderately dull due to the crystallinity of the polyurethane resin, as a result of which the effect of preventing halation can also be obtained.

As the vapor deposition layer 7, for example, a layer of aluminum, aluminum oxide, silicon oxide, or the like can be provided. When a film composed of a thermoplastic resin is used as the lid material film 4A, it is preferable to provide a vapor deposition layer 7 of aluminum in view of improving a barrier property and improving a suitability for a foreign matter inspection utilizing a near-infrared ray.

The thickness of the vapor deposition layer 7 is appropriately adjusted according to a required barrier property (particularly water vapor permeability), near-infrared reflecting property, or concealment property in double-sided printing. The thickness of the vapor deposition layer 7 is preferably from 10 nm to 500 nm and more preferably from 20 nm to 100 nm from a viewpoint of barrier property. When the thickness is more than 500 nm, which is excessively thick, the corresponding effect of improving a gas barrier property cannot be obtained. The thickness is preferably from 10 nm to 200 nm and more preferably from 20 nm to 100 nm in view of near-infrared reflecting property or concealment property in double-sided printing.

### (Dynamic friction coefficient between bottom material and heat-seal layer)

The lid material for a PTP package 8 of the present embodiment has a dynamic friction coefficient between the bottom material 1 and the heat-seal layer 3 of preferably less than 0.8 µD, more preferably from 0.1 µD to 0.6 µD, and still more preferably from 0.15 µD to 0.5 µD. When the dynamic friction coefficient in the lid material for a PTP package 8 is less than 0.8 µD, it is possible to heat-seal without any wrinkle in the lid material when the PTP package is heat-sealed.

In the present disclosure, the dynamic friction coefficient in the lid material for a PTP package 8 is a value measured by the procedure explained in the [EXAMPLES] section described later.

### (Gloss value of lid material for PTP package)

The lid material for a PTP package 8 of the present embodiment has a gloss value measured from the heat-seal layer 3 side of preferably from 30 to 600, more preferably from 50 to 600, still more preferably from 50 to 400, and particularly preferably from 50 to 200. When the gloss value of the lid material for a PTP package 8 is 30 or more, characters printed under the heat-seal layer can be easily discriminated, while when it is 600 or less, particularly, in a case in which the heat-seal layer 3 is provided with a vapor deposition layer 7 of aluminum or the like, halation is less likely to occur in a camera inspection with a packaging machine.

In the present disclosure, the gloss value of the lid material for a PTP package 8 is a value measured by the procedure explained in the [EXAMPLES] section described later.

### (Method for producing lid material for PTP package)

As mentioned above, the lid material for a PTP package 8 of the present embodiment can be produced by applying a heat-sealing agent, which is a mixture of an adhesive resin, a filler, and the like, on the lid material film 4A to form the heat-sealing layer 3. Hereinafter, the method in which a heat-sealing agent is applied and dried on the lid material film 4A is exemplified in detail.

Examples of coating methods include gravure coating, reverse roll coating, knife coating, kiss coating, and other methods. Gravure coating is preferred in view of adjustment of the coating amount, operability, coating rate, and the like.

The coating amount of the heat-sealing agent is preferably from 3 g/m² to 20 g/m² (equivalent to from 3 µm to 20 µm in terms of thickness) and more preferably from 5 g/m² to 15 g/m² in view of improving the heat-sealing strength of the PTP package and the penetrability of the PTP package.

The coating rate is preferably from 10 m/min to 300 m/min and more preferably from 20 m/min to 200 m/min. When the coating rate is 10 m/min or more, overheating does not occur during drying and thermal wrinkles are unlikely to be generated after coating, resulting in favorable productivity. When the coating rate is 300 m/min or less, apron marks and blocking due to insufficient drying are unlikely to be generated, and the lid material film 4A hardly breaks.

Examples of drying methods after coating include hot air injection types (tunnel type, air floating, round hole nozzle, high speed air cap, and counter flow), drum types, infrared rays, microwaves (induction heating), electromagnetic induction heating, ultraviolet rays, electron beams, and other methods. Hot air injection types (tunnel type, air floating, and round hole nozzle) are preferable, and a hot air injection type (air floating) is more preferable in view of operatability, coating rate, wrinkles after coating, and the like.

Although the drying temperature and time vary depending on the kind of heat-sealing agent, the kind of diluting solvent, the solid content, the liquid viscosity, the coating rate, and the type of dryer, the drying temperature and time may be set as follows.

The drying temperature is preferably from 50°C to 115°C and more preferably from 60°C to 100°C. When the drying temperature is 50°C or higher, apron marks and blocking due to insufficient drying are unlikely to be generated, and when the drying temperature is 115°C or lower, overheating does not occur during drying and wrinkles are unlikely to be generated after coating.

The drying time is preferably from 1 second to 200 seconds, more preferably from 2 seconds to 100 seconds, and still more preferably from 3 seconds to 30 seconds. When the drying time is 1 second or more, apron marks and blocking due to insufficient drying are unlikely to be generated, and when the drying time is 200 seconds or less, overheating does not occur during drying and wrinkles are unlikely to be generated after coating, resulting in improved productivity.

In the above-described manufacture process, a character or bar code can be printed on the lid material film 4A using a photogravure press or the like. Further, a varnish layer can be provided on the surface on which a character or bar code is printed.

Another aspect of the lid material for a PTP package of the present embodiment is a lid material for a press-through pack package comprising a heat-seal layer composed of a heat-sealing agent and a lid material film, wherein the heat-sealing agent contains an adhesive resin having a melting point of 40°C or higher and lower than 90°C.

The heat-seal layer 3 contains an adhesive resin having a melting point of 40°C or higher and lower than 90°C. By this heat-seal layer 3 included in the lid material 8, the bottom material 1 and the lid material 8 can have a sufficient heat-seal strength and have a favorable appearance without a folding wrinkle in the flange portion 1b that is heat-sealed even when the lid material 8 is heat-sealed at a low temperature (about 120°C) for an extremely short time of 0.03 second or less.

Further, by an adhesive resin mainly composed of a polyurethane resin contained in the heat-seal layer 3, the lid material 8 can exhibit an excellent sliding property.

Further, using a polyurethane resin as an adhesive resin, the elongation of the heat-seal layer 3 is improved. Therefore, when the content 2 is pushed out from the PTP package 10, the torn lid material 8 is not separated and remains in the PTP package 10 owing to elongation of the heat-seal layer 3, as a result of which accidental ingestion of the torn lid material 8 can be advantageously prevented.

### (Lid material film)

In another aspect of the lid material for a PTP package of the present embodiment, the lid material film 4A described above can be used as a lid material film 4A.

### (Heat-seal layer)

The raw material of the heat-seal layer 3 included in the lid material 8 is a heat-sealing agent as mentioned below, and the heat-seal layer 3 is preferably composed only of a heat-sealing agent.

The heat-sealing agent contains an adhesive resin having a melting point of 40°C or higher and lower than 90°C. The heat-sealing agent may further contain a filler.

### - Adhesive resin -

The adhesive resin has a melting point of 40°C or higher and lower than 90°C. The adhesive resin and the bottom material 1 can be fused (heat-sealed) to each other by melting the adhesive resin or melting the adhesive resin together with the bottom material 1 by heat.

The melting point of the adhesive resin is 40°C or higher and lower than 90°C, preferably from 45°C to 85°C, and more preferably from 50°C to 80°C. When the melting point of the adhesive resin is 40°C or higher and lower than 90°C, it becomes possible to achieve both prevention of blocking and low-temperature heat-sealing property.

In the present disclosure, the melting point of the adhesive resin is a value measured according to JIS K7121.

Although the kind of adhesive resin may be any kind that has a melting point of 40°C or higher and lower than 90°C, it is preferable that the adhesive resin is mainly composed of at least one selected from the group consisting of a polyurethane resin, a polyester resin, an acrylic resin, and a vinyl acetate copolymer. Among these, the polyurethane resin is particularly preferred from a viewpoint of excellent low-temperature heat-sealing property. These resins may be used in combination so that the content of the component mainly composed of these resins is 50 mass% or more of the adhesive resin to the extent that the properties of the adhesive resin are not impaired.

For example, a polyvinyl butyral resin, a vinyl benzene resin, a polyamide resin, a vinyl chloride/vinyl acetate copolymer, a vinyl chloride/polyester resin, a chlorinated polyolefin (a chlorinated polypropylene, a chlorinated polyethylene, or the like), a styrene block copolymer or a derivative thereof (a styrene-isoprene block copolymer, a styrene-butadiene block copolymer, or a hydrogenated product or maleic anhydride-modified product thereof), or the like may be contained in the adhesive resin in an amount within the range of preferably less than 50 mass%, more preferably less than 40 mass%, and particularly preferably less than 30 mass% to the extent that the properties of the adhesive resin are not impaired.

### -- Polyurethane resin --

The polyurethane resin described above can be used as a polyurethane resin. The melting point of the polyurethane resin is preferably 40°C or higher and lower than 90°C.

### -- Polyester resin --

The polyester resin described above can be used as a polyester resin. The melting point of the polyester resin is preferably 40°C or higher and lower than 90°C.

### -- Acrylic resin --

The acrylic resin described above can be used as an acrylic resin. The melting point of the acrylic resin is preferably 40°C or higher and lower than 90°C.

### -- Vinyl acetate copolymer --

The vinyl acetate copolymer described above can be used as a vinyl acetate copolymer. The melting point of the vinyl acetate copolymer is preferably 40°C or higher and lower than 90°C.

The elongation of the adhesive resin is preferably within the above-described ranges.

### - Filler -

As a filler that may be contained in the heat-sealing agent, the above-described filler can be used in a compounding amount within the above-described ranges.

As a method for providing the heat-seal layer 3 on the lid material film 4A, the above-described method can be used.

The thickness of the heat-seal layer 3 is preferably within the above-described ranges.

### (Vapor deposition layer)

In another aspect of the lid material for a PTP package of the present embodiment, the above-described vapor deposition layer 7 may be provided between the lid material film 4A and the heat-seal layer 3 (at the position F1). In particular, in a PTP package 10 having the vapor deposition layer 7 in addition to a heat-seal layer 3 containing an adhesive resin including a polyurethane resin, the gloss of the vapor deposition layer 7 becomes moderately dull due to the crystallinity of the polyurethane resin, as a result of which the effect of preventing halation can also be obtained.

### (Dynamic friction coefficient between bottom material and heat-seal layer)

The dynamic friction coefficient between the bottom material 1 and the heat-seal layer 3 is preferably within the above-described ranges.

### (Gloss value of lid material for PTP package)

The gloss value measured from the heat-seal layer 3 side is preferably within the above-described ranges.

### (Method for producing lid material for PTP package)

Another aspect of the lid material for a PTP package of the present embodiment can be produced by the above-described production method.

Although the preferred embodiment of the present disclosure has been described, the present disclosure is not limited to the embodiment set forth above.

For example, a lid material film 4A composed of a monolayer stretched film has been exemplified in the embodiment set forth above, but a lid material film 4A composed of a multilayer stretched film having two or more layers may be used.

Further, the case in which the heat-seal layer 3 is directly disposed on the surface F1 of the lid material film 4A and the case in which the vapor deposition layer 7 is provided between the lid material film 4A and the heat-seal layer 3 (at the position F1) have been exemplified in the embodiment set forth above, but other layers may be provided between the lid material film 4A and the heat-seal layer 3 and the surface protective layer 6 (at the position F2).

### <Bottom material>

The bottom material 1 used in the PTP package 10 in the present embodiment may be, for example, a sheet material containing, preferably composed of a well-known synthetic resin, such as a polyvinyl chloride resin, a polyvinylidene chloride resin, a polyolefin resin (for example, a polyethylene resin, a polypropylene resin, an ethylene-vinyl alcohol copolymer resin, a resin composed of a cyclic olefin, or the like), a polychlorotrifluoroethylene, or a polyester. Among these, a sheet material composed of a polyvinyl chloride resin is particularly preferred in view of a wide range of a forming condition for vacuum forming or pressure forming into the pocket-shaped recess 1a of the bottom material 1, mechanical strength, transparency, and cost.

The thermal deformation temperature according to JIS K7191 (method A and method B) of the above-described bottom material 1 is preferably from 50°C to 110°C and more preferably from 60°C to 90°C from a viewpoint of a wide range of a forming condition for vacuum forming or pressure forming into the pocket-shaped recess 1a of the bottom material 1.

The shape of the bottom material 1 is not particularly limited, but the shapes of the bottom surface portion and the opening portion of the recess 1a may be respectively a rectangle (square, oblong, triangle, or the like) or a round shape (circle, ellipse, or the like). The rectangle may have rounded corners.

In terms of the size of a bottom material 1 of a sample punched out by a forming machine after heat-sealing, the depth of a recess 1a may be from 1 mm to 15 mm and is preferably from 2 mm to 10 mm. In particular, when the shapes of the opening portion and the bottom surface portion of the recess 1a are round, the diameter of each opening portion may be from 10 mm to 150 mm and is preferably from 20 mm to 100 mm, and the diameter of each bottom surface portion may be from 10% to 20% smaller than the diameter of the corresponding opening portion.

Although no specific limitations are placed on the flange portion 1b, the flange portion 1b may be provided so as to extend in the direction orthogonal to the depth direction of the recessed 1a.

The average width of the flange portion 1b may be from 2 mm to 100 mm and is preferably from 4 mm to 50 mm.

No specific limitations are placed on the thickness L2 of the bottom material 1. However, the thickness L2 may be from 100 µm to 500 µm and is preferably from 150 µm to 300 µm.

### <PTP package>

The PTP package 10 of the present embodiment is not limited to the above and is a package obtainable by pasting a lid material for a press-through pack package 8 having a heat-seal layer 3 composed of a heat-sealing agent containing an adhesive resin and a filler, and a lid material film 4A; and a bottom material 1 having a recess 1a for accommodating a content 2 and a flange portion 1b to be pasted to the heat-seal layer 3 of the lid material for a press-through pack package 8, to each other.

### (Method for producing PTP package)

The PTP package 10 of the present embodiment may be produced by superimposing and heat-sealing the surface of the bottom material 1 and the surface of the heat-seal layer 3 of the lid material 8.

The heat-sealing temperature may be, for example, from 100°C to 200°C. Preferably, the heat-sealing temperature is from 100°C to 150°C from a viewpoint that a burn mark of the content 2 is less likely to be left. The heat-sealing time may be a short time of less than 1 second, for example, from 0.01 second to 0.8 second. From a viewpoint that a burn mark of the content 2 is less likely to be left, the heat-sealing time is preferably from 0.01 second to 0.4 second. From a viewpoint of productivity, the heat-sealing time is preferably from 0.01 second to 0.05 second and more preferably an extremely short time of from 0.01 second to 0.03 second. The heat-sealing pressure may be, for example, from 0.2 MPa to 0.6 MPa. Preferably, the heat-sealing pressure is from 0.3 MPa to 0.5 MPa from a viewpoint that a burn mark of the content 2 is less likely to be left.

A forming machine used for forming the PTP package 10 in the present embodiment may be, for example, a roll seal forming machine that performs heat-sealing by sandwiching the lid material 8 and the bottom material 1 between a heat-seal roll and a under-seal roll or a flat seal forming machine that has flat plate heating molds on the top and the bottom and sandwiches the lid material 8 and the bottom material 1 between the molds to perform forming.

In the present embodiment, among these, a method in which the PTP package 10 is formed using a high-speed roll seal packaging machine having a line speed of more than 10 m/min is desirable from a viewpoint of productivity of the PTP package.

### EXAMPLES

The following provides a more specific description of the present disclosure through examples and comparative examples.

Note that the present disclosure is not limited to these examples.

The materials used in examples and comparative examples are as follows.

### (1) Lid material film

(i) PS film 1: a film composed of a thermoplastic resin having a Vicat softening point of 120°C, a thickness of 25 µm, and a thrust strength of 4.8 N, which was prepared by compounding 90 mass% of a styrene-methacrylic acid-methyl methacrylate copolymer (methyl methacrylate content: 5 mass%, methacrylic acid content: 10 mass%, Vicat softening point = 123°C) and 10 mass% of a high impact polystyrene (produced by DIC Corporation, impact resistant polystyrene GH8300-5, Vicat softening point = 95°C) based on 100 mass% of the whole resin components, stretching by inflation, and then performing a corona treatment at 50 mN/m on both sides of the film.
(ii) PS film 2: a film composed of a thermoplastic resin having a Vicat softening point of 103°C, a thickness of 25 µm, and a thrust strength of 4.2 N, which was prepared by stretching a general purpose polystyrene (produced by PS Japan Corporation, general purpose polystyrene G9504, Vicat softening point = 103°C) by inflation and then performing a corona treatment at 50 mN/m on both sides of the film.

### (2) Adhesive resin

(i) Urethane 1: an aqueous polyurethane resin (produced by DIC Corporation, HYDRAN ADS-110, melting point: 46°C)
(ii) Urethane 2: an aqueous polyurethane resin (produced by DIC Corporation, HYDRAN AP201, melting point: 53°C)
(iii) Urethane 3: an aqueous polyurethane resin (produced by ADEKA Corporation, ADEKA BONTIGHTER HUX-282, melting point: none)
(iv) Acryl 1: an acrylic resin (produced by BASF SE, Joncryl (a water dispersion of an ammonium salt of a styrene/acrylate copolymer, non-volatile component: 35 mass%, glass transition temperature: -5°C, melting point: none)
(v) EVA1: an ethylene/vinyl acetate copolymer resin (produced by Dainichiseika Color & Chemicals Mfg. Co., Ltd., SEIKADYNE 1900W, melting point: 65°C)

### (3) Filler

(i) Silica: amorphous silica (produced by Fuji Silysia Chemical, Ltd., SYLYSIA series)
(ii) PE: polyethylene beads (produced by BYK-Chemie GmbH, AQUAMAT 208)
(iii) PMMA: polymethylmethacrylate crosslinked polymer beads (produced by Sekisui Plastics Co., Ltd., Techpolymer MBX and SSX series)

### (5) Bottom material

PVC: a rigid vinyl chloride monolayer sheet (SUMILITE VSS series (thickness: 250 µm) produced by Sumitomo Bakelite Co., Ltd., thermal deformation temperature of both method A and method B: about 60°C to 70°C). The bottom material was formed so as to have a recess having a depth of 4 mm, an opening diameter of 10 mm, and a bottom surface diameter of 8 mm and a flange portion that has an average width of 10 mm and extends in a direction perpendicular to the depth direction.

Methods for analyzing properties of materials used in examples and comparative examples are as follows.

### [Storage elastic modulus of adhesive resin]

A heat-sealing agent was applied onto a plane surface made of polypropylene that was easily peeled off and dried at room temperature. The obtained resin was hot-pressed at 80°C, and a specimen having a diameter of 8 mm and a thickness of 0.1 mm to 2.0 mm was prepared from the obtained sheet.

The specimen obtained above was measured using a forced vibration type dynamic viscoelasticity measuring device (produced by Anton Paar GmbH, MCR301) under conditions of a measuring frequency of 1 Hz, a heating rate of 1°C/min, and a temperature range of from 0°C to 100°C. The storage elastic modulus at 30°C E1 (Pa), the storage elastic modulus at 60°C E2 (Pa), and the storage elastic modulus at 80°C E3 (Pa) were measured, and the values of E1/E2 and E2/E3 were calculated.

### [Elongation of adhesive resin]

The elongation of the adhesive resin (%) was measured according to JIS K 7127 using a specimen having a width of 10 mm, a lateral length of 50 mm, and a thickness of from 0.1 mm to 2 mm obtained in the same manner as in [Storage elastic modulus of adhesive resin] set forth above.

### [Melting point of adhesive resin]

The melting point of the adhesive resin (°C) was measured by DSC according to JIS K 7121 at a heating rate of 20°C/min using a specimen having a diameter of 8 mm and a thickness of from 0.1 mm to 2 mm obtained in the same manner as in [Storage elastic modulus of adhesive resin] set forth above. When two or more melting point peaks were seen, the peak having the largest peak area was determined as the melting point peak.

### [Thickness of heat-seal layer]

The thickness (µm) of the portion of the heat-seal layer that does not contain a filler refers to an average value obtained by microscopically observing a cut section of a slice of the lid material before heat-sealing that was prepared using a microtome, followed by measuring with a scale at three positions in the portion without the filler, and is given in Table 1.

### [Gloss value of lid material]

The gloss value of the lid material refers to an average gloss level obtained by measuring from the heat-seal layer side according to JIS Z8741-1997 at an incident angle of 45° with respect to the vapor deposition surface with the measurement number: n = 3.

### [Dynamic friction coefficient between bottom material and heat-seal layer]

The dynamic friction coefficient between the bottom material and the heat-seal layer (µD) was measured according to ASTM D 1894-95. The dynamic friction coefficient between the heat-sealed surface of the lid material and the surface of the bottom material was measured using a lid material film for the moving specimen and the PVC sheet used as the bottom material for the fixed specimen. As test conditions, a test speed of 150 mm/min, a moving distance of 130 mm, and a slider weight of 113 g were used.

### <Evaluation items>

Evaluations of the following items were performed on lid materials prepared in examples and comparative examples and PTP packages using the same.

### (1) Low-temperature heat-sealing property of PTP package

The size of the recess (pocket) of the bottom material was as described above. The tablet, which was a content, had a columnar shape, a tablet diameter of 8.6 mm, and a tablet height of 3.8 mm.

In terms of heat-sealing conditions, conditions of a temperature of 120°C, a sealing pressure of 0.4 MPa, and a filling rate of 12 m/min (300 shots/min, corresponding to a sealing time of 0.03 second) were employed as standard conditions. Further, in other conditions, both the temperature for forming the bottom material and the slit temperature of PVC were 130°C, and in the working room environment, the temperature was 23°C and the humidity was 50% RH.

The prepared PTP package was subjected to a reduced pressure leak test (100 pockets of PTP packages were placed in water and held at -67 kPa for 5 minutes to check for water leakage in the PTP pockets), to thereby confirm the heat-sealing strength. Further, the low-temperature heat-sealing strength between the heat-seal layer and the bottom material was evaluated based on the following criteria from the state when the lid material was broken open by pushing out the tablet with a thumb from the bottom material side. The higher the heat-sealing strength was, the higher the low-temperature heat-sealing property was evaluated.

### <Decision criteria>

A: As a result of the reduced pressure leak test, of the 100 pockets, the number of pockets from which water had leaked was zero. The tablet was pushed out neatly without peeling off the heat-seal layer and the bottom material. The heat-seal layer and the bottom material securely adheres and the strength is sufficient even when the heat-sealing temperature is low (120°C or lower). Therefore, this case is very practical.
B: As a result of the reduced pressure leak test, of the 100 pockets, the number of pockets from which water had leaked was from 1 to 2. Although the heat-seal layer and the bottom material may peel off slightly, it is possible to push out the tablet without any problem, and there is no practical problem.
C: As a result of the reduced pressure leak test, of the 100 pockets, the number of pockets from which water had leaked was three or more. Before pushing out the tablet, the heat-seal layer and the bottom material are peeled off, and the heat-sealing strength is insufficient. This case is decided as unsuitable for practical use.

### (2) Tablet-taking-out property of PTP package (fragment generation)

In terms of the tablet-taking-out property of the PTP package, generation of fragments when the tablet was pushed out by hand from the PTP package after preparation was evaluated based on the following criteria.

### <Decision criteria>

A: When tablets in 100 pockets were pushed out by hand, no fragment of the lid material was generated.
B: When tablets in 100 pockets were pushed out by hand, one to two fragments of the lid material were generated.
C: When the tablets in 100 pockets were pushed out by hand, three or more fragments of the lid material were generated.

### (3) Tablet-taking-out property of PTP package (tablet-pushing-out property)

In terms of the tablet-taking-out property of the PTP package, the tablet-pushing-out property when the tablet was pushed out by hand from the PTP package after preparation was evaluated based on the following criteria.

### <Decision criteria>

AA: The ratio of the broken lid material in the blister portion due to extrusion of the tablet was 270° or more in circumference, and thus the tablet could be easily taken out.
A: The ratio of the broken lid material in the blister portion due to extrusion of the tablet was more than 180° and less than 270° in circumference, and thus the tablet could be easily taken out.
B: The ratio of the broken lid material in the blister portion due to extrusion of the tablet was 180° or less in circumference, and thus the tablet could be taken out by turning over the unbroken lid material by hand.
C: The lid material was not broken or the heat-seal layer stretched, and thus the tablet could not be taken out.

### (4) Halation evaluation

A circular white tablet having a tablet diameter of 8.6 mm and a tablet height of 3.8 mm that had been prepared by tableting crystalline cellulose was placed on the PTP lid material with the heat-seal surface of the lid material facing upward. While irradiating a light source from a height of 30 cm, imaging was performed with a digital camera (produced by Fujifilm Corporation, XP70) so that the tablet was centered.

The obtained image was binarized, and the degree of halation was evaluated.

### <Decision criteria>

A: By binarization, tablets could be replaced with white and everything except the tablets could be replaced with black.
B: By binarization, tablets could be replaced with white and other parts than the tablets could be replaced with black, but some noise was generated.
C: By binarization, the size of the halation portion replaced with white exceeded the tablet size, and the image could not be inspected.

### (5) Wrinkle of PTP package (folding wrinkle in flange portion)

The appearance of the prepared PTP package was evaluated by the presence or absence of folding wrinkles during heat-sealing of the flange portion.

### <Decision criteria>

A: There was no folding wrinkle in the flange portion.
B: Folding wrinkles that were smaller than 3mm were slightly generated in the flange portion, but there was no problem in use.
C: Folding wrinkles that were 3mm or larger were generated in the flange portion.

### [Example 1]

A black alphabetical letter in Gothic having a character size = 7 points was printed on one side of a PS film 1 (a film composed of a styrene-methyl methacrylate-methacrylic acid copolymer and a high impact polystyrene) by a gravure printing machine with a plate having a screen ruling = 230 lines/inch and a cell depth = 20 µm. An aluminum deposition layer was provided on the opposite side of the printed surface by vacuum deposition. A red alphabetical letter in Gothic having a character size = 7 points was printed on the vapor deposition layer by a gravure printing machine with a plate having a screen ruling = 230 lines/inch and a cell depth = 20 µm. Onto this printed surface, a heat-sealing agent (Urethane 1) was applied using a plate having a screen ruling = 80 lines/inch and a cell depth = 130 µm.

Prior to applying, the heat-sealing agent was diluted with water so that the non-volatile content was 40 mass% and the viscosity was from 100 mPa·s to 1000 mPa·s.

After applying, the inside of a hot air dryer set at 100°C was dried for 5 seconds to obtain a lid material.

A polyvinyl chloride (PVC) sheet having a thickness of 250 µm was used for a bottom material, in which a recess was formed by a PTP forming machine (produced by CKD Corporation, FBP-300E), followed by filling tablets to the bottom material and then bonding the bottom material and the lid material for a PTP package by heat-sealing to obtain the PTP package. The heating roll used at that time was a mirror roll with no irregularity due to engraving by a dies or the like on its surface.

In terms of heat-sealing conditions, conditions of a temperature of 120°C, a sealing pressure of 0.4 MPa, and a filling rate of 12 m/min (300 shots/min, corresponding to a sealing time of 0.03 second) was employed as standard conditions. Further, in other conditions, both the temperature for forming the bottom material and the slit temperature were 130°C, and in the working room environment, the temperature was 23°C and the humidity was 50% RH.

The evaluation results are given in Table 1.

### [Examples 2 and 3]

In Examples 2 and 3, a lid material was prepared in the same manner as in Example 1 except that the thickness of the heat-seal layer was changed as given in Table 1, to thereby obtain a PTP package. The detailed conditions and evaluation results are given in Table 1.

### [Examples 4 to 7]

In Examples 4 to 7, a lid material was prepared in the same manner as in Example 1 except that a heat-seal layer was formed by mixing each filler given in Table 1 with a heat-sealing agent, to thereby obtain a PTP package.

The heat-seal layer was formed specifically as follows. Prior to applying, the heat-sealing agent was diluted with water so that the non-volatile content was 40 mass% and the viscosity was from 100 mPa·s to 1000 mPa·s, and each filler was mixed so as to have each amount in terms of part by mass that is given in Table 1 based on 100 parts by mass of the solid content in Urethane 1. Then, the resultant was applied onto the vapor deposition layer using a plate having a screen ruling = 80 lines/inch and a cell depth = 130 µm.

The detailed conditions and evaluation results are given in Table 1.

### [Example 8]

In Example 8, a lid material was prepared in the same manner as in Example 1 except that no vapor deposition layer was formed, to thereby obtain a PTP package. The detailed conditions and evaluation results are given in Table 1.

### [Examples 9 and 10]

In Examples 9 and 10, a lid material was prepared in the same manner as in Example 1 except that the thickness of the heat-seal layer was changed as given in Table 1, to thereby obtain a PTP package. The detailed conditions and evaluation results are given in Table 1.

### [Comparative Examples 1 to 4]

In comparative examples 1 to 4, a lid material was prepared in the same manner as in Example 1 except that the raw material, the thickness, and the like were changed as given in Table 1, to thereby obtain a PTP package. The detailed conditions and evaluation results are given in Table 1.

In comparative examples 2 to 4, heat-sealing sufficient to evaluate the tablet-taking-out property and generation of fragments could not be performed.

**[Table 1]**

| | | | | | Examples | | | | | | | | | | Comparative examples | | | |
|---|---|---|---|---|---|---|---|---|---|---|---|---|---|---|---|---|---|---|
| | | | | | 1 | 2 | 3 | 4 | 5 | 6 | 7 | 8 | 9 | 10 | 1 | 2 | 3 | 4 |
| | | Lid material film | Kind | | PS film 1 | PS film 1 | PS film 1 | PS film 1 | PS film 1 | PS film 1 | PS film 2 | PS film 1 | PS film 1 | PS film 1 | PS film 1 | PS film 1 | PS film 1 | PS film 1 |
| | | | Thickness [µm] | | 25 | 20 | 25 | 25 | 25 | 25 | 25 | 25 | 25 | 25 | 25 | 25 | 25 | 25 |
| | | Vapor deposition layer | Kind | | A1 | A1 | A1 | A1 | A1 | A1 | A1 | - | A1 | A1 | A1 | A1 | A1 | A1 |
| | | | Thickness [nm] | | 50 | 50 | 50 | 50 | 50 | 50 | 50 | | 50 | 50 | 50 | 50 | 50 | 50 |
| | | Heat-seal layer | Adhesive resin | Kind | Urethane 1 | Urethane 1 | Urethane 1 | Urethane 1 | Urethane 1 | Urethane 1 | Urethane 1 | Urethane 1 | Urethane 1 | Urethane 1 | Urethane 2 | Urethane 3 | Acryl 1 | EVA 1 |
| | | | | Compounding amount [part by weight] | 100 | 100 | 100 | 100 | 100 | 100 | 100 | 100 | 100 | 100 | 100 | 100 | 100 | 100 |
| | | | | E1 [Pa] | 1.5 x 10⁶ | 1.5 x 10⁶ | 1.5 x 10⁶ | 1.5 x 10⁶ | 1.5 x 10⁶ | 1.5 x10⁶ | 1.5 x 10⁶ | 1.5 x 10⁶ | 1.5 x 10⁶ | 1.5 x 10⁶ | 1.9 x 10^{6,} | 7 x 10⁵ | 3 x 10⁶ | 3.5 x 10⁶ |
| PTP | Lid material | | | E2 [Pa] | 3.0 x 10⁵ | 3.0 x 10⁵ | 3.0 x 10⁵ | 3.0 x 10⁵ | 3.0 x 10⁵ | 3.0 x 10⁵ | 3.0 x 10⁵ | 3.0 x 10⁵ | 3.0 x 10⁵ | 3.0 x 10⁵ | 6 x 10⁵ | 6 x 10⁵ | 6 x 10⁶ | 3.0 x 10⁵ |
| package | | | | E3 [Pa] | 1.6 x 10⁵ | 1.6 x 10⁵ | 1.6 x 10⁵ | 1.6 x 10' | 1.6 x 10' | 1.6 x 10' | 1.6 x 10' | 1.6 x 10⁵ | 1.6 x 10⁵ | 1.6 x 10⁵ | 4 x 10⁵ | 5.2 x 10⁵ | 1.1 x 10⁶ | 1.2 x 10⁴ |
| | | | | E1/E2 | 5.00 | 5.00 | 5.00 | 5.00 | 5.00 | 5.00 | 5.00 | 5.00 | 5.00 | 5.00 | 3.17 | 1.17 | 0.50 | 11.67 |
| | | | | E2/E3 | 1.88 | 1.88 | 1.88 | 1.88 | 1.88 | 1.88 | 1.88 | 1.88 | 1.88 | 1.88 | 1.50 | 1.15 | 5.45 | 25.00 |
| | | | | Elongation [%] | 700 | 700 | 700 | 600 | 450 | 500 | 600 | 700 | 700 | 700 | 550 | 600 | 600 | 600 |
| | | | | Melting point [°C] | 46 | 46 | 46 | 46 | 46 | 46 | 46 | 46 | 46 | 46 | 53 | None | None | 65 |
| | | | Filler | Kind | - | - | - | Silica | PE | PMMA | Silica | - | - | - | - | - | - | - |
| | | | | Compounding amount [part by weight] | - | - | - | 2 | 10 | 2.5 | 2 | - | - | - | - | - | - | - |
| | | | Thickness [µm] | | 5 | 12 | 6 | 6 | 6 | 6 | 6 | 6 | 25 | 3 | 8 | 8 | 8 | 8 |
| | | Gloss value | | | 550 | 400 | 500 | 160 | 180 | 450 | 160 | Unmeasured | 300 | 650 | 800 | 750 | 800 | 800 |
| | | Dynamic friction coefficient [µD] | | | 0.54 | 0.55 | 0.52 | 0.41 | 0.36 | 0.44 | 0.41 | 0.58 | 0.55 | 0.49 | 0.73 | 1.43 | 0.65 | 0.69 |
| | Bottom material | Kind | | | PVC | PVC | PVC | PVC | PVC | PVC | PVC | PVC | PVC | PVC | PVC | PVC | PVC | PVC |
| | | Thickness [µm] | | | 250 | 250 | 250 | 250 | 250 | 250 | 250 | 250 | 250 | 250 | 250 | 250 | 250 | 250 |
| Physical properties evaluation | PTP package | Low-temperature heat-sealing property | | | A | A | A | A | A | A | A | A | A | B | C | C | C | C |
| | | Tablet- taking-out property | Fragment generation | | B | A | A | A | A | A | A | A | A | C | A | U nevaluable | U nevaluable | U nevaluable |
| | | | Tablet-pushing-out property | | AA | B | AA | AA | AA | AA | AA | A | C | AA | A | U nevaluable | U nevaluable | U nevaluable |
| | | Halation | | | B | A | B | A | A | A | A | U nevaluated | A | C | C | C | C | C |
| | | Wrinkle | | | A | A | A | A | A | A | A | A | A | A | A | A | A | A |

### [INDUSTRIAL APPLICABILITY]

The lid material for a PTP package of the present disclosure can be suitably used for a package of medicine such as a tablet or a capsule, or food such as candy or chocolate.

### REFERENCE SIGNS LIST

- 1: bottom material
- 1a: recess of bottom material
- 1b: flange portion of bottom material
- 2: content (tablet)
- 3: heat-seal layer
- 4A: lid material film
- 5: printed portion
- 6: surface protective layer
- 7: vapor deposition layer
- 8: lid material
- 9: clearance between content and lid material
- 10: package
- F1: surface
- F2: surface

## Claims

1. A lid material for a press-through pack package, comprising a heat-seal layer composed of a heat-sealing agent and a lid material film, wherein
the heat-sealing agent contains an adhesive resin having a ratio E1/E2 of a storage elastic modulus at 30°C E1 to a storage elastic modulus at 60°C E2 of from 4.0 to 20.0 and a ratio E2/E3 of E2 to a storage elastic modulus at 80°C E3 of from 1.3 to 4.0.

2. A lid material for a press-through pack package, comprising a heat-seal layer composed of a heat-sealing agent and a lid material film, wherein
the heat-sealing agent contains an adhesive resin having a melting point of from 40°C to lower than 90°C.

3. The lid material for a press-through pack package according to claim 1 or 2, wherein the adhesive resin is mainly composed of at least one selected from the group consisting of a polyurethane resin, a polyester resin, an acrylic resin, and a vinyl acetate copolymer.

4. The lid material for a press-through pack package according to any one of claims 1 to 3, wherein the adhesive resin is mainly composed of a polyurethane resin.

5. The lid material for a press-through pack package according to any one of claims 1 to 4, wherein the heat-seal layer has a thickness of from 4 µm to 15 µm.

6. The lid material for a press-through pack package according to any one of claims 1 to 5, wherein the adhesive resin has an elongation of from 200% to 1000%.

7. The lid material for a press-through pack package according to any one of claims 1 to 6, wherein the lid material film contains a styrene resin.

8. The lid material for a press-through pack package according to claim 7, wherein the lid material film has a thickness of from 15µm to 30 µm.

9. The lid material for a press-through pack package according to any one of claims 1 to 8, wherein a vapor deposition layer is provided between the heat-seal layer and the lid material film.

10. The lid material for a press-through pack package according to claim 9, wherein a gloss value measured from the heat-seal layer side is from 50 to 600.
